# EUROPEAN PATENT APPLICATION

(11) **EP 3 131 031 A1**
(43) Date of publication of application: **15.02.2017**
(21) Application number: 16184081.4
(22) Date of filing: 12.08.2016
(51) Int. Cl.: G06F 21/10

(54) **CONTENT SECURITY PROCESSING METHOD AND ELECTRONIC DEVICE SUPPORTING THE SAME**

(30) Priority: 13.08.2015 KR 20150114637
(71) Applicant: Samsung Electronics Co., Ltd., Suwon-si, Gyeonggi-do 16677 (KR)
(72) Inventor: Song, Hye Min, Suwon-si 16225 (KR); Park, Joon Ho, Hwaseong-si 18444 (KR); Seo, Young Su, 16516 Suwon-si (KR); Lee, Tae Soo, Seoul 08771 (KR); Jung, Yu Jin, Suwon-si 16571 (KR); Kim, Hyung Deuk, Suwon-si 16667 (KR); Park, Jun Sung, Suwon-si 16698 (KR); Bae, Kuk Jin, Suwon-si 16690 (KR); Lee, Chang Wook, Hwaseong-si 18379 (KR); Cha, Mi Ji, Suwon-si 16537 (KR)
(74) Representative: Nederlandsch Octrooibureau

(57) **Abstract**

An electronic device is provided. The electronic device includes a housing of the electronic device, a memory disposed in the housing, a user interface, and a processor electrically connected with the memory and the user interface. The memory stores instructions, which, when executed, cause the processor to store encrypted content in the memory, receive an input for loading the content through the user interface, decrypt the content based at least in part on the input, store the decrypted content in the memory separately from the encrypted content, and provide the decrypted content through the user interface.

## Description

### PRIORITY

This application claims priority to Korean Patent Application No. 10-2015-0114637, filed August 13, 2015, the content of which is incorporated herein by reference.

### BACKGROUND OF THE INVENTION

### 1. Field of the Invention

The present disclosure relates to a method of processing security of content security.

### 2. Background of the Invention

Information exchange among electronic devices is actively made as wired and/or wireless communication technologies are developed. For example, a variety of content including text, icons, audio data, video data, symbols, or the like are actively exchanged through the Internet. As such, there is increasing interest in content security. For example, security processing technologies such as information rights management (IRM) are being actively developed.

In an electronic device of the related art, since security processing functions of applications (e.g., an editor application, a viewer application, and the like) that execute content are different from each other, there is difficulty in updating a program such that the program supports the security processing function for each application or installing a plug-in program supporting the security processing function for each application. A method of processing content security based on the execution application is highly dependent on each execution application and does not support smooth compatibility among applications.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below. Accordingly, an aspect of the present disclosure is to provide a content security processing method that provides a security processing service to each application through a security processing module operating independently of an application of executing content and an electronic device supporting the same.

Another aspect of the present disclosure is to provide a content security processing method that supports encryption and decryption of content, change of an access path about the content, or restriction of a function module based on use rights of the content by using a security processing module and an electronic device supporting the same.

In accordance with an aspect of the present disclosure, an electronic device is provided. The electronic device includes a housing of the electronic device, a memory disposed in the housing, a user interface, and a processor electrically connected with the memory and the user interface. The memory stores instructions which, when executed, cause the processor to store encrypted content in the memory, receive an input for loading the content through the user interface, decrypt the content based at least in part on the input, store the decrypted content in the memory separately from the encrypted content, and provide the decrypted content through the user interface.

In accordance with another aspect of the present disclosure, an electronic device is provided. The electronic device includes a housing of the electronic device, a memory in the housing, a user interface, and a processor electrically connected with the memory and the user interface. The memory stores instructions, which, when executed, cause the processor to receive an input for generating or editing content through the user interface, store the content in an unencrypted state in the memory, receive a user input for storing the unencrypted content, encrypt the content based at least in part on the user input, and store the encrypted content in the memory separately from the unencrypted content.

In accordance with another aspect of the present disclosure, a content security processing method is provided. The method includes decrypting encrypted content stored in a first path of a memory, storing the decrypted content in a second path of the memory, and providing the second content to an application, which uses the content, when the application is executed.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device in a network environment according to an embodiment of the present disclosure;
FIG. 2 is a drawing describing content security processing through changing of an access path of content according to an embodiment of the present disclosure;
FIG. 3 is a drawing describing content security processing through encryption of content according to an embodiment of the present disclosure;
FIG. 4 is a drawing describing content security processing through control of a function module according to an embodiment of the present disclosure;
FIG. 5 illustrates an operating method of an electronic device associated with the execution of content according to an embodiment of the present disclosure;
FIG. 6 shows an operating method of an electronic device associated with storing of content according to an embodiment of the present disclosure;
FIG. 7 shows an operating method of an electronic device associated with termination of an application that uses content according to an embodiment of the present disclosure;
FIG. 8 is a drawing describing encryption of content by a user input according to an embodiment of the present disclosure;
FIG. 9 is a block diagram of an electronic device according to an embodiment of the present disclosure; and
FIG 10 illustrates a block diagram of a program module according to an embodiment of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The expressions "have", "may have", "include" and "comprise", or "may include" and "may comprise" used herein indicate existence of corresponding features (e.g., elements such as numeric values, functions, operations, or components) but do not exclude presence of additional features.

The expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), the element can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there is no intervening element (e.g., a third element).

According to the situation, the expression "configured to" used herein may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor (AP)) which performs corresponding operations by executing one or more software programs which are stored in a memory device.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Moving Picture Experts Group (MPEG-1 or MPEG-2) phase 1 or phase 2 audio layer 3 (MP3) players, mobile medical devices, cameras, or wearable devices. According to various embodiments, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or an implantable type (e.g., an implantable circuit).

The electronic device may be a home appliance. The smart home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSyncTM, Apple TVTM, or Google TVTM), game consoles (e.g., XboxTM and PlayStationTM), electronic dictionaries, electronic keys, camcorders, electronic picture frames, and the like.

The electronic device may include at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

The electronic devices may include at least one of parts of furniture or buildings/structures, electronic boards, electronic signature receiving devices, projectors, or various measuring instruments (e.g., water meters, electricity meters, gas meters, or wave meters, and the like). The electronic device may be one of the above-described devices or a combination thereof. An electronic device according to an embodiment of the present disclosure may be a flexible electronic device. Furthermore, an electronic device may not be limited to the above-described electronic devices and may include other electronic devices and new electronic devices according to the development of technology.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

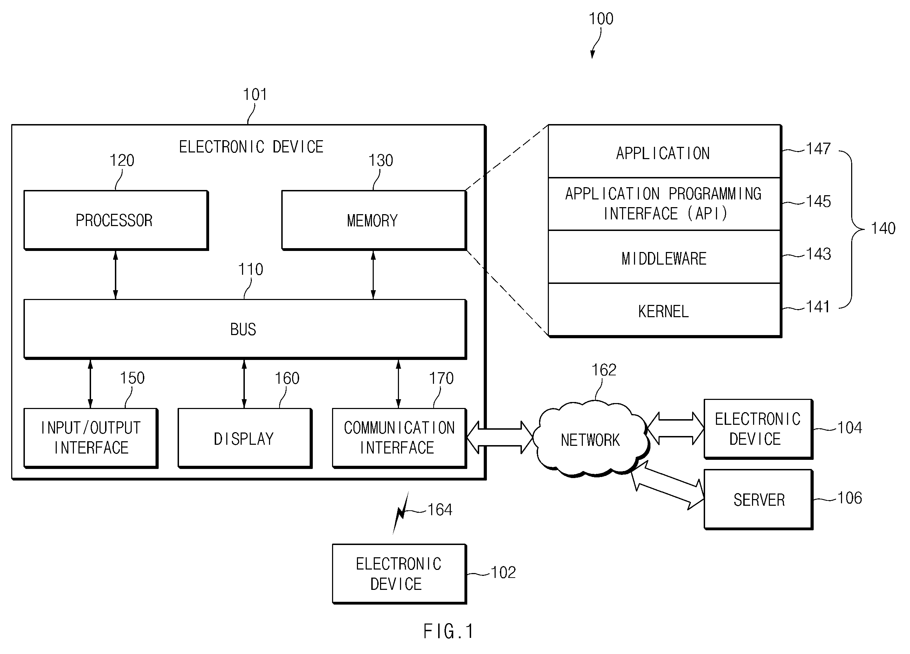

FIG. 1 is a block diagram of an electronic device in a network environment according to various embodiments of the present disclosure.

Referring to FIG. 1, the electronic device 101 in a network environment 100 may include a security processing module (not shown) with regard to security processing of content. The security processing module may operate independently of an application (e.g., an application 147) executing content and may provide a security processing service to the application executing the content. The security processing module may be implemented so as to be included in a processor 120 or independently thereof and may be connected with other elements, which are included in the electronic device 101, through a bus 110 or directly.

Referring to FIG. 1, the electronic device 101 may include the bus 110, the processor 120, a memory 130, an input/output (I/O) interface 150, a display (e.g., a user interface) 160, and a communication interface 170. The electronic device 101 may omit at least one of the above-described elements or may further include any other component(s).

The bus 110 may interconnect the above-described elements 110 to 170 and may include a circuit for conveying communications (e.g., a control message and/or data) among the above-described elements.

The processor 120 may include one or more of a CPU, an AP, or a communication processor (CP). The processor 120 may perform, for example, data processing or an operation associated with control or communication of at least one other component(s) of the electronic device 101.

The processor 120 may control an operation about content based on authentication information. The processor 120 may encrypt and decrypt the content based on the authentication information. The processor 120 may store and update the content based on the authentication information. The authentication information may include at least one of information about an application of executing the content, information about a user accessible to the content, or use rights information about the content. The application information may include information about an identifier (ID) (e.g., a product name or a product ID of the application 147), a product key, or a version of an application. The user information may include an ID (e.g., a user name, a user ID, a user e-mail address, or the like) of a user, information (e.g., an ID (e.g., a phone number, a network address, a serial number, or the like) of an electronic device (e.g., the electronic device 101) that a user carries (or registers), a platform (or operating system (OS) information) of an electronic device, or the like. The use rights information may include an available function (e.g., read, write, execute, edit, copy, output, or the like), an available period, or the like. The available function may be set to an unavailable function based on a platform of the electronic device 101.

The processor 120 may be provided with the authentication information from an authentication server (e.g., a server 106). For example, the processor 120 may collect the authentication information from the authentication server that is connected in a wired/wireless communication way based on the communication interface 170. Furthermore, the processor 120 may store the authentication information in the memory 130. The processor 120 may encrypt and decrypt the authentication information at regular time intervals. For example, the processor 120 may collect authentication information from the authentication server at regular time intervals to update authentication information stored in the memory 130. The authentication information may be included in the content. For example, the authentication information may be included in a file header of the content. In this case, the processor 120 may extract the authentication information included in the content and may store the extracted authentication information in the memory 130.

The processor 120 may change a storage path (or a save path) of the content. The processor 120 may allow content, which is stored in a first path of the memory 130, to be stored in a second path. The processor 120 may control such that the content is decrypted and stored when the storage path of the content is changed. For example, the processor 120 may decrypt encrypted content stored in the first path and store the decrypted content and may control such that the decrypted content are stored in the second path. When storing the decrypted content in the second path, the processor 120 may set a rights policy differently based on the use rights information. For example, in the case where a write function about the content is restricted, the processor 120 may set the rights policy to "read only" such that the content is stored in the second path. As such, if the content is executed by a designated application, the designated application may be executed in a state where a write function button included in the designated application is inactivated.

With regard to execution of the content, the processor 120 may provide the second path, in which the decrypted content is stored, to an application (e.g., the application 147) capable of using the content. For example, if there is executed an application set to use content stored in the first path in which the encrypted content is stored, the processor 120 may allow the application to use only content stored in the second path. As such, if the application is executed to use only content stored in the second path, the application may use decrypted content, and thus the application may operate based on a content use function that does not need a separate decryption process.

The processor 120 may create the second path. For example, the processor 120 may decrypt encrypted content stored in an area corresponding to the first path of the memory 130 and may store the decrypted content in the memory 130. The processor 120 may create the second path corresponding to the decrypted content and may provide the second path to the application (e.g., the application 147).

The area, corresponding to the second path, of the memory 130 may be a secure area (e.g., a memory area that is divided physically or logically and is accessible only through an account, a designated domain, or an application having a designated path or rights). For example, the processor 120 may restrict an access such that only an application having rights to access the second path uses content stored in the second path. In this case, content stored in the second path may be data that is obtained by decrypting content stored the first path. Furthermore, an application provided with the second path may be an application that is authenticated based on the authentication information to allow the application to use the content. If the application that is not authenticated to use the content is executed, the processor 120 may provide the first path to the application. In this case, content stored in the first path may be encrypted data. As such, the processor 120 may restrict the unauthenticated application with regard to the use of the content. According to various embodiments, in the case where content stored in the first path is not encrypted, the processor 120 may provide the first path to the application.

The processor 120 may store and manage a list of applications capable of executing the content (i.e., a list of applications (hereinafter referred to as "white app list") each having rights to access the content in the memory 130). As such, the processor 120 may determine whether, upon execution of the content, a corresponding application is an application included in the white app list. In the case where the corresponding application is the application included in the white app list, the processor 120 may provide the second path to the corresponding application. Alternatively, if the corresponding application is an application that does not have rights to access the content, the processor 120 may provide the first path to the corresponding application.

The processor 120 may monitor an area, corresponding to the second path, of the memory 130. For example, the processor 120 may monitor whether content is stored to the second path of the memory 130 and content stored in the second path are edited. If the content is stored in the second path of the memory 130 or the content stored in the second path are edited, the processor 120 may perform the following post-processing operations based on the use rights of the content: encrypting the content and storing the encrypted content in the first path. In the case where authentication information is set such that a write function about the content is restricted, the processor 120 may invalidate updating of the content in the first path. For example, even though decrypted content set to "read only" is stored in the second path in a writable state and is edited, the processor 120 may not update the content in the first path, thereby making it possible to accomplish a purpose of the use rights. If an application executing the content terminates, the processor 120 may control such that content stored in the second path is deleted.

The processor 120 may restrict the use of a function module included in the electronic device 101 based on the use rights of content. For example, the processor 120 may restrict the use of the function module based on use rights information of content included in the authentication information. The function module may include, for example, a screen capture module, an audio capture module, a clipboard management module, or the like. In the case where a copy function as an available function is excluded from the use rights information of the content, the processor 120 may restrict the use of the clipboard management module. In the case where a read function is set as the available function, the processor 120 may restrict the use of the screen capture module, the audio capture module, the clipboard management module, and the like. As such, a function other than a function having the use rights of the content may be prevented from being performed by another application, which is executed independently of the application that uses the content or by a user input.

The memory 130 may include a volatile and/or nonvolatile memory. For example, the memory 130 may store commands (or instructions) or data associated with at least one other component(s) of the electronic device 101. The memory 130 may store software and/or a program 140. The program 140 may include, for example, a kernel 141, a middleware 143, an application programming interface (API) 145, and/or the application program (or an application) 147. At least a part of the kernel 141, the middleware 143, or the API 145 may be called an "OS".

The kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete elements of the electronic device 101 so as to control or manage system resources.

The middleware 143 may perform, for example, a mediation role such that the API 145 or the application program 147 communicates with the kernel 141 and exchanges data with the kernel 141. The middleware 143 may process one or more task requests received from the application program 147 based on priorities. For example, the middleware 143 may assign the priority, which makes it possible to use a system resource (e.g., the bus 110, the processor 120, the memory 130, or the like) of the electronic device 101, to at least one of the application program 147. The middleware 143 may also process the one or more task requests according to the priority assigned to the at least one application 147, which makes it possible to perform scheduling or load balancing on the one or more task requests.

The API 145 may be an interface through which the application program 147 controls a function provided by the kernel 141 or the middleware 143 and may include, for example, at least one interface or function (e.g., an instruction) for a file control, a window control, image processing, a character control, or the like.

The memory 130 may store content. The memory 130 may store various content (e.g., documents, photos, videos, and the like) that are collected from an external electronic device (e.g., a first external electronic device 102, a second external electronic device 104, or the server 106) connected in a wired/wireless communication way.

The application 147 may be a set of programs (e.g., instructions) for performing at least one designated function and may include a content execution application and the like. The content execution application may be provided with a security processing service from the processor 120. For example, the content execution application may be provided with an access path of the content from the processor 120 upon execution of designated content. The access path of the content may be, for example, the second path. As such, even though an application is not an application (e.g., an application to which information rights management (IRM) software development kit (SDK), in which a content encryption/decryption solution is included, is applied) having the security processing function, the application may be provided with an access path for the decrypted content, thereby obtaining the same effect as the encrypted content is executed. In the application having the security processing function, the application may perform encryption and decryption of content by itself.

The I/O interface 150 may transmit an instruction or data, which are input from a user or another external device, to any other element(s) of the electronic device 101. Furthermore, the I/O interface 150 may output an instruction or data, which is received from any other component(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various kinds of content (e.g., text, an image, a video, an icon, a symbol, and the like) to a user. The display 160 may include a touch screen and may receive, for example, a touch, gesture, proximity, or hovering input using an electronic pen or a part of a user's body.

The communication interface 170 may establish communication between the electronic device 101 and an external electronic device (e.g., a first external electronic device 102, a second external electronic device 104, or a server 106). For example, the communication interface 170 may be connected to the network 162 through wireless communication or wired communication and may communicate with an external device (e.g., the second external device 104 or the server 106).

The wireless communication may include at least one of, for example, long-term evolution (LTE), LTE advance (LTE-A), code division multiple access (CDMA), wideband CDMA (WCDMA), universal mobile telecommunications system (UMTS), wireless broadband (WiBro), or global system for mobile communications (GSM), or the like, as cellular communication protocol. Furthermore, the wireless communication may include, for example, a local area network 164. The local area network 164 may include at least one of a Wi-Fi, a near field communication (NFC), or a global navigation satellite system (GNSS), or the like. The GNSS may include at least one of a GPS, a global navigation satellite system (Glonass), Beidou navigation satellite system (hereinafter referred to as "Beidou"), the European global satellite-based navigation system (Galileo), or the like. In the present disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., local area network (LAN) or wide area network (WAN)), an Internet, or a telephone network.

Each of the external first and second external electronic devices 102 and 104 may be a device of which the type is different from or the same as that of the electronic device 101. The server 106 may include a server or a group of two or more servers. All or a part of operations that the electronic device 101 will perform may be executed by another or plural electronic devices (e.g., the first and second external electronic devices 102 and 104 and the server 106). In the case where the electronic device 101 executes any function or service automatically or in response to a request, the electronic device 101 may not perform the function or the service internally, but may request at least a part of a function associated with the electronic device 101 from other device (e.g., the first or second external electronic device 102 or 104 or the server 106). The other electronic device (e.g., the first or second external electronic device 102 or 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

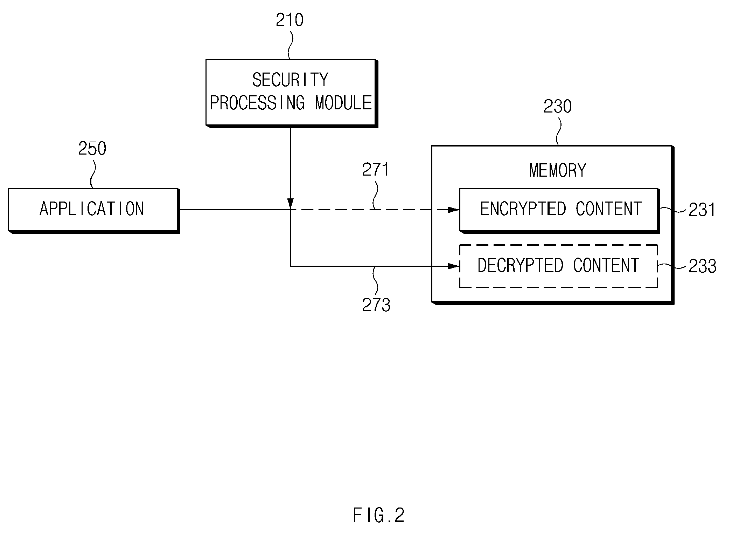

FIG. 2 is a drawing describing content security processing through the change of an access path of content according to an embodiment of the present disclosure.

Referring to FIG. 2, an electronic device (e.g., the electronic device 101 of FIG. 1) may include a security processing module 210, a memory 230, and an application 250. The security processing module may have a configuration that is the same as or similar to that of the processor 120 of FIG. 1. The security processing module 210 may be configured such that the security processing module 210 is included in a processor (e.g., the processor 120 of FIG. 1) of an electronic device or may be configured independently. The security processing module 210 may perform a security processing function of content.

The memory 230 may have a configuration that is the same as or similar to that of the memory 130 of FIG. 1. For example, the memory 230 may store various kinds of content. In the embodiment shown in FIG. 2, the memory 230 stores encrypted content 231 in a first path 271 and decrypted content 233 in a second path 273, respectively.

The encrypted content may be stored in the first path 271. For example, the encrypted content 231 may be stored in the first path 271 based on authentication information including at least one of information of an application having rights to access the content, information of a user having rights to access the content, security key information, or use rights information of the content. Content that is obtained from an external electronic device (e.g., the first external electronic device 102, the second external electronic device 104, or the server of FIG. 1) may be encrypted by the security processing module 210 or the application having a security processing function, and the encrypted content may be stored in the first path 271. Content that is not encrypted because the security processing function is not applied to the content

(e.g., content to which access rights and use rights about an application or a user are not set) may also be stored in the first path 271.

Data obtained by decrypting the encrypted content 231 (i.e., the decrypted content 233) may be stored in the second path 273. For example, the security processing module 210 may decrypt the encrypted content 233, which is stored in the first path 271, using the authentication information and may store the decrypted content 233 in the second path 273.

A configuration of the application 250 may be the same as or similar to that of the application 147 of FIG. 1. The application 250 may include, for example, a content execution application for executing content stored in the memory 230. The application 250 may include a document viewer application, a document editor application, an audio play application, a video play application, or the like. In the embodiment shown in FIG. 2, the application 250 is independent of the memory 230. This is to describe how an access path of the application 250 to the memory 230 is changed. According to various embodiments, the application 250 may be stored in the memory 230. Associated instructions may be loaded on the memory 230 upon execution of the application 250 and may be executed according to a defined routine.

With regard to execution of the encrypted content 231, the security processing module 210 may change an access path of the encrypted content 231 from the first path 271 to the second path 273 and may provide the second path 273 to the application 250. For example, the security processing module 210 may decrypt the encrypted content 233 that is stored in the first path 271 and may store the decrypted content in the second path 273. If an execution instruction of the encrypted content 231 is executed, the security processing module 210 may provide the second path 273 instead of the first path 271 to the application 250 to allow the application 250 to use the decrypted content 233 stored in the second path 273. In the case where the use of the decrypted content 233 terminates or in the case where the execution of the application 250 terminates, the security processing module 210 may control such that the decrypted content 233 stored in the second path 273 is deleted.

The security processing module 210 may provide the second path 273 to only an application having rights to access the content. For example, the security processing module 210 may provide the first path 271 to an application, which does not have rights to access the content, without modification such that the content is used in an encrypted state. As such, the security processing module 210 may control an access to the content such that the application, which does not have rights to access the content, does not open or execute the content. Alternatively, the security processing module 210 may control such that data of an encrypted form is output even though the application, which does not have rights to access the content, opens or executes the content.

The security processing module 210 may change an access path of content upon mounting of the memory 230. In the case where an external storage medium (e.g., a secure digital (SD) card or the like) is connected to and mounted on an electronic device, the security processing module 210 may change an access path of content stored in the external storage medium. For example, the security processing module 210 may assign an access path about at least a part of the external storage medium to the first path 271. The security processing module 210 may decrypt the encrypted content 231 stored in the first path 271 and may store the decrypted content in the second path 273. In this case, the second path 273 may be an access path about an internal memory of an electronic device or an access path about a part of the remaining area of the external storage medium.

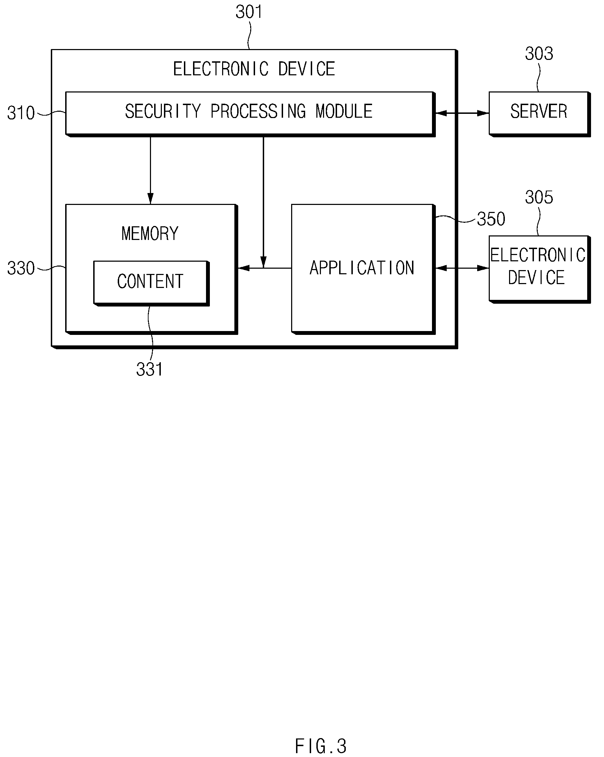

FIG. 3 is a drawing describing content security processing through the encryption of content according to an embodiment of the present disclosure. Below, a description that is the same as or similar to the above description will be omitted.

Referring to FIG. 3, an electronic device 301 may include a security processing module 310, a memory 330, and an application 350. The security processing module 310 may have a configuration that is the same as or similar to that of the security processing module 210 of FIG. 2. Furthermore, each of the memory 330 and the application 350 may have a configuration that is the same as or similar to that of each of the memory 230 and the application 250 of FIG. 2.

The security processing module 310 may control an operation about content based on authentication information. For example, the security processing module 310 may encrypt, decrypt, store, or update content 331 based on authentication information including at least one of information of an application having rights to access the content 331, information of a user having rights to access the content 331, security key information, or use rights information of the content 331.

The encryption module 310 may collect the authentication information from a server 303. The server 303 may be a server device that a content provider or a service provider operates. The service provider may be, for example, a communication service provider, an authentication service provider, or the like. The security processing module 310 may store the authentication information in the memory 330. The security processing module 310 may collect the authentication information from the server 303 at regular time intervals and may update the collected authentication information in the memory 330. The authentication information may be included in the content 331.

According to various embodiments, with regard to execution of the content 331, the security processing module 310 may determine whether the application 350 is an application having rights to access the content 331, based on the authentication information. In the case where the application 350 has access rights, as described with reference to FIG. 2, the security processing module 310 may provide the application 350 with a second path (e.g., the second path 273 of FIG. 2) in which data obtained by encrypting the content 331 is stored. In the case where the application 350 has no access rights, the security processing module 310 may provide the application 350 with a first path (e.g., the first path 271 of FIG. 2) in which the encrypted content is stored.

The electronic device 301 may collect the content 331 from an external electronic device 305 by executing a function of a designated application. The designated application may be, for example, an application for connecting to a content provider server, a content share application, or the like. For example, the electronic device 301 may collect the content 331 from the content provider server by using a download function of a content download application. In this case, the security processing module 310 may encrypt the content 331, which are collected from the external electronic device 305, by using authentication information and may control such that the encrypted content 331 is stored in the first path of the memory 330. Alternatively, in the case where the application has the security processing function, the application may encrypt the collected content 331 itself. According to various embodiments, if not performing a security processing function about designated content because an encryption/decryption module (or an encryption/decryption processing routine) about the designated content is absent in the security processing module 310, the security processing module 310 may collect an encryption/decryption module from the server 303.

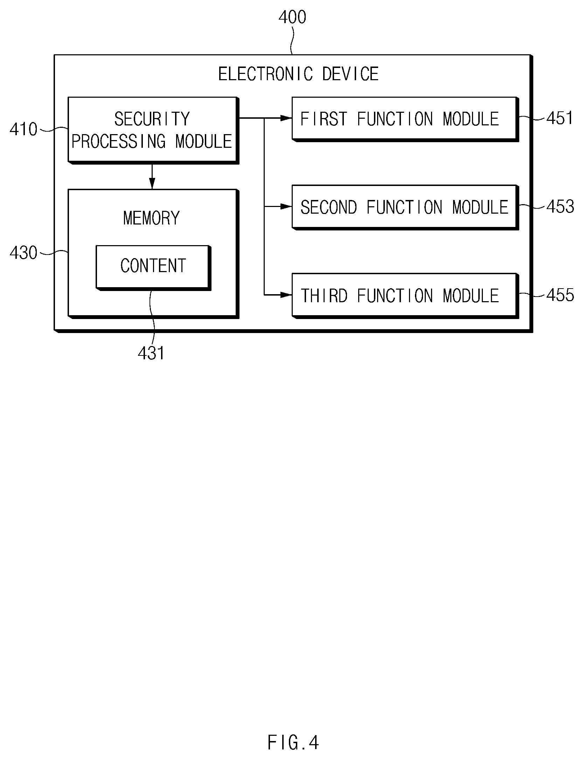

FIG. 4 is a drawing describing content security processing through the control of a function module according to an embodiment of the present disclosure. Below, a description that is the same as or similar to the above description will be omitted.

Referring to FIG. 4, an electronic device 400 may include a security processing module 410, a memory 430, and at least one function module (e.g., a first function module 451, a second function module 453, a third function module 455, or the like). The security processing module 410 may have a configuration that is the same as or similar to that of the security processing module 210 of FIG. 2 or the security processing module 310 of FIG. 3. Furthermore, the memory 430 may have a configuration that is the same as or similar to that of the memory 230 of FIG. 2 or the memory 330 of FIG. 3.

To perform a designated function of the electronic device 400, the function module may be implemented with at least one hardware, software, or firmware included in the electronic device 400. The function module may include, for example, a screen capture module, an audio capture module, a clipboard management module, or the like. The screen capture module may capture a screen that is currently output through a display (e.g., the display160 of FIG. 1) of the electronic device 400. The audio capture module may capture audio that is currently output through an output device (e.g., the I/O interface of FIG. 1) of the electronic device 400. The clipboard capture module may manage a partial area of the memory 430, in which at least a part of content is stored, with regard to a cut, copy, or paste function about the at least a part of the content.

The security processing module 410 may restrict the use of the function module based on use rights information of content 431 included in the authentication information. The security processing module 410 may verify the use rights information of the content 431 with regard to execution of an application that uses the content 431. In the case where a designated function is restricted through the use rights information of the content 431, the security processing module 410 may restrict the use of the function module associated with the designated function. For example, in the case where the copy function is set as an unusable function of the content 431, the security processing module 410 may restrict the use the clipboard management module and the like associated with the copy function of the content 431. The security processing module 410 may maintain the restriction about the function module until an application executing the content 431 terminates. The security processing module 410 may maintain the restriction about the function module even though an application of executing the content 431 is inactivated and executed in background. As such, even though another application is activated and executed in foreground, a function that conflicts with the use rights of the content 431 may be prevented from being executed.

As described above, an electronic device may include a housing of the electronic device, a memory disposed in the housing, a user interface (e.g., a display), and a processor electrically connected with the memory and the user interface. The memory may store instructions, which, when executed, cause the processor to store encrypted content in the memory, receive an input for loading the content through the user interface, decrypt the content based at least in part on the input, store the decrypted content in the memory separately from the encrypted content, and provide the decrypted content through the user interface.

The instructions may cause the processor to decrypt the content based on authentication information including at least one of information about an application executing the content, information about user access to the content, security key information, or use rights information about the content.

The instructions may cause the processor to store the encrypted content in a first path of the memory and store the decrypted content in a second path different from the first path.

The instructions may cause the processor to provide the second path to an application that uses the content.

The instructions may cause the processor to delete the decrypted content if a use termination request of the content is received.

The instructions may cause the processor to restrict a use of a function module of the electronic device supporting a function that is not set in the use rights information of the content.

The function module of the electronic device may include at least one of a screen capture module, an audio capture module, or a clipboard management module.

According to various embodiments of the present disclosure, an electronic device may include a housing of the electronic device, a memory in the housing, a user interface, and a processor electrically connected with the memory and the user interface, wherein the memory may store instructions, which, when executed, cause the processor to receive an input for generating or editing content through the user interface, store the content in an unencrypted state in the memory, receive a user input for storing the unencrypted content, encrypt the content based at least in part on the user input, and store the encrypted content in the memory separately from the unencrypted content.

The instructions may cause the processor to determine whether to store the encrypted content based on use rights information of the content.

The instructions may cause the processor to delete the unencrypted content after the user input is received.

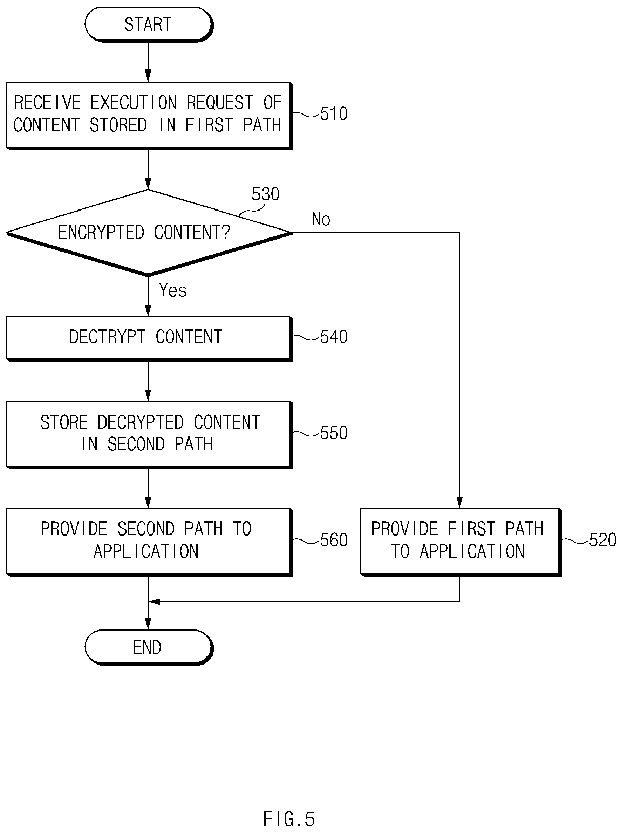

FIG. 5 illustrates an operating method of an electronic device associated with the execution of content according to an embodiment of the present disclosure.

Referring to FIG. 5, in operation 510, an electronic device (e.g., the electronic device 101 of FIG. 1) may receive an execution request for content stored in a first path (e.g., the first path 271 of FIG. 2) of a memory. For example, if a user selects designated content (e.g., a document or the like) on an input screen for selecting content, the electronic device may receive the execution request for the content.

In operation 530, the electronic device may determine whether the content is encrypted. For example, the electronic device may determine whether the content is encrypted based on authentication information including at least one of information of an application having rights to access the content, information of a user having rights to access the content, security key information, or use rights information of the content. The content may include information, which corresponds to (or is matched with) the authentication information, in a part (e.g., a header) thereof. In this case, the electronic device may determine the content as the encrypted content. Alternatively, the content may include information, which indicates whether encryption is performed, in a part thereof.

In the case where the content is not encrypted, the electronic device may provide the first path to an application executing the content in operation 520.

In the case where the content is encrypted, the electronic device may decrypt the encrypted content in operation 540. The electronic device may decrypt the encrypted content based on the authentication information. Between operation 530 and operation 540, the electronic device may verify access rights of the application that are associated with the content. For example, the electronic device may determine whether the application is included in the white app list. In the case where the application is included in the white app list, the electronic device may perform operation 540. In the case where the application is not included in the white app list, the electronic device may perform operation 520.

In operation 550, the electronic device may store the decrypted data in a second path (e.g., the second path 273 of FIG. 2). The first and second paths may be different storage paths of the same memory. The first and second paths may be different storage paths of different memories. For example, the first path may be an access path about a partial area of an internal memory of the electronic device, and the second path may be an access path about a partial area of an external storage medium.

In operation 560, the electronic device may provide the second path to the application. As such, the application may execute the content based on data that is obtained by decrypting the encrypted data. The electronic device may provide the second path to only an application having rights to access the content. As such, an application that does not have rights to access the content may be prevented from executing the content. The electronic device may provide the first path to an application that does not have rights to access the content. For example, the electronic device may provide the first path to an application having no rights to access the content, allowing the application to use the encrypted content. As such, the electronic device may restrict access to the content such that the application having no access rights does not open or execute the content or may control such that encrypted data is output even though the application opens or executes the content.

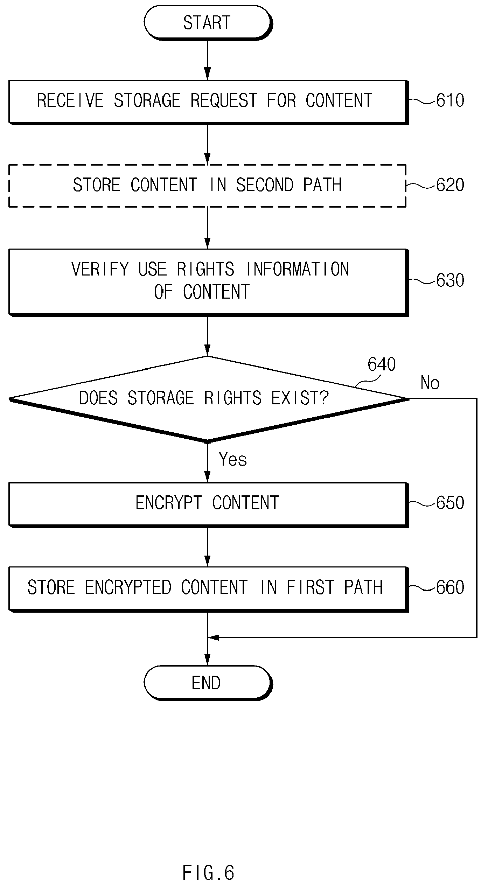

FIG. 6 illustrates an operating method of an electronic device associated with the storing of content according to an embodiment of the present disclosure.

Referring to FIG. 6, in operation 610, an electronic device (e.g., the electronic device 101 of FIG. 1) may receive a storage request (or a save request) for content. For example, the electronic device may receive the storage request for content if a storage function button included in an execution application that uses the content is selected. The electronic device may determine whether the content is changed (or edited). If the content is determined as being not changed (or edited), the electronic device may not perform operations 620 to operation 660.

In operation 620, the electronic device may store the data in a second path (e.g., the second path 273 of FIG. 2) of a memory. According to an embodiment of the present disclosure, operation 620 may be omitted.

In operation 630, the electronic device may verify use rights information of the content. For example, the electronic device may verify an available function (e.g., read, write, execute, edit, copy, output, or the like), an available period, or the like about the content.

In operation 640, the electronic device may determine whether storage rights (or save rights) about the content exist. In the case where a writable function or an edit function is set as the available function about the content, the electronic device may determine that the storage rights about the content exists.

In the case where the storage rights about the content exist, the electronic device may encrypt the content in operation 650. The electronic device may encrypt the content based on authentication information including at least one of information of an application having rights to access the content, information of a user having rights to access the content, security key information, or use rights information of the content. In operation 660, the electronic device may store the encrypted content in a first path (e.g., the first path 271 of FIG. 1). The first path may be a storage path before the content is executed by the execution application.

In the case where the storage rights about the content does not exist, operation 650 and operation 660 may not be performed. As such, even though the content is stored in the second path in a state where the write function or the edit function is available, the electronic device may not store the content in the first path, thereby accomplishing a purpose of the use rights.

With regard to the storage request of the content, the electronic device may allow an access to only the second path. The electronic device may set the second path as a root directory and may control an output of an access path about the content such that only the second path is provided as a directory to a user. As such, the electronic device may prevent the user from selecting another access path. Even though the user creates a new folder, the electronic device may allow the new folder to be created on a sub path of the second path.

In operation 630, the electronic device may verify other information included in the authentication information as well as use rights information about the content. For example, the other information may include information about an application having rights to access the content or information about a user having rights to access the content. In this case, (not shown), in operation 640, the electronic device may determine whether an application has the rights to access the content or a user has the rights to use (or access) the content, based on the information about the application having the access rights about the content included in the authentication information or the user information. As such, even though the storage rights about the content exist, in the case where an application or a user does not have the rights to access the content, the electronic device may not perform operation 650 and operation 660.

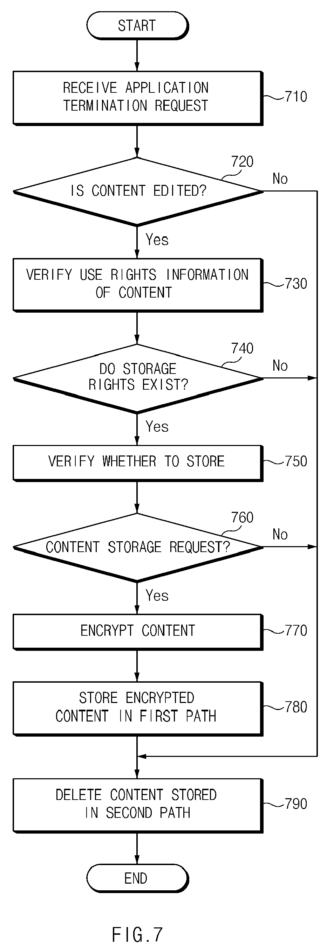

FIG. 7 illustrates an operating method of an electronic device associated with the termination of an application that uses content according to an embodiment of the present disclosure.

Referring to FIG. 7, in operation 710, an electronic device (e.g., the electronic device 101 of FIG. 1) may receive a termination request of an application that uses designated content. For example, the electronic device may receive the termination request of the application if a termination function button included in the application is selected, if a program termination routine is executed, or if a termination function is executed by the platform of the electronic device.

In operation 720, the electronic device may determine whether the content is edited. In the case where the content is not edited, the electronic device may delete the content stored in a second path (e.g., the second path 273 of FIG. 2) of a memory in operation 790. The content stored in the second path may be decrypted data of content stored in a first path (e.g., the first path 271 of FIG. 2).

In the case where the content is edited, the electronic device may verify use rights information of the content in operation 730. In operation 740, the electronic device may determine whether storage rights about the content exist, based on the use rights information. The electronic device may determine that the storage rights about the content exists if a writable function or an edit function is set as an available function about the content.

In the case where the storage rights about the content do not exist, the electronic device may perform operation 790. In the case where the storage rights about the content exist, the electronic device may determine whether to store the content in operation 750. The electronic device may output, on a display (e.g., the display 160 of FIG. 1), a display object (e.g., a pop-up object or the like) that makes it possible for a user to select whether to save the content.

If a user input about the display object is generated, the electronic device may determine whether the storage request about the content is generated in operation 760. The electronic device may analyze the user input and may determine whether the user input corresponds to an input corresponding to the storage request about the content, based on the analyzing result. For example, the electronic device may determine whether the user input is an input for selecting the save function button included in the pop-up object.

In the case where the storage request about the content is not generated, the electronic device may perform operation 790. For example, in the case where the output of the display object is maintained over a designated time, the electronic device may perform operation 790. Alternatively, in the case where a save cancel button included in the display object is selected, the electronic device may perform operation 790.

In the case where the storage request about the content is generated, the electronic device may encrypt the content in operation 770. The electronic device may encrypt the content based on authentication information including at least one of information of an application having rights to access the content, information of a user having rights to access the content, security key information, or use rights information of the content.

In operation 780, the electronic device may store the encrypted content in the first path. Furthermore, in operation 790, the electronic device may delete content stored in the second path.

In operation 730, the electronic device may verify other information included in the authentication information as well as use rights information about the content. For example, the other information may include information about an application having rights to access the content or information about a user having rights to access the content. Furthermore, in operation 740, the electronic device may determine whether an application has the rights to access the content as well as the storage rights about the content or a user has the rights to access the content as well as the storage rights about the content. As such, even though the storage rights about the content exist, in the case where an application or a user does not have the rights to access the content, the electronic device may not perform operations 750 to operation 780.

According to various embodiments of the present disclosure, a content security processing method of an electronic device may include decrypting encrypted content stored in a first path of a memory, storing the decrypted content in a second path of the memory, and providing the second content to an application, which uses the content, when the application is executed.

The decrypting may include decrypting the content based on authentication information including at least one of information about an application executing the content, information about user access to the content, security key information, or use rights information about the content.

The method may further include at least one of receiving the authentication information from an external device or extracting the authentication information from the content.

The method may further include storing the authentication information in the memory.

The method may further include restricting a use of a function module of the electronic device supporting a function that is not set in the use rights information of the content.

The restricting of the use of the function module may include at least one of restricting a use of a screen capture module, restricting a use of an audio capture module, and restricting a use of a clipboard management module.

The method may further include deleting the decrypted content if a use termination request of the content is received.

The method may further include storing the content of an unencrypted state in the memory if an input for generating or editing the content is received, receiving a user input for storing the unencrypted content, encrypting the content based at least in part on the user input, and storing the encrypted content in the memory separately from the unencrypted content.

The method may further include determining whether to perform an operation for storing the encrypted content in the memory based on use rights information of the content.

The method may further include deleting the unencrypted content if the user input is received.

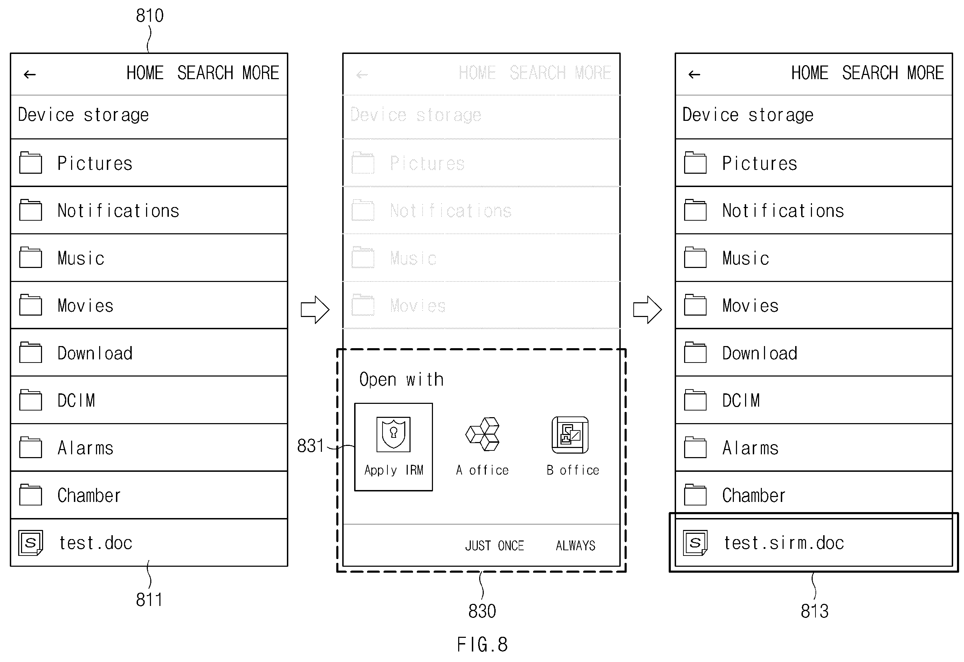

FIG. 8 is a drawing describing encryption of content by a user input according to an embodiment of the present disclosure.

Referring to FIG. 8, an electronic device (e.g., the electronic device 101 of FIG. 1) may output a content selection input screen 810 to a display (e.g., the display 160 of FIG. 1). The content selection input screen 810 may be a screen that is displayed such that a user easily finds a save path of a memory (e.g., the memory 130 of FIG. 1) in which at least one content is stored. For example, the content selection input screen 810 may be a screen on which folders, files, and the like included in the memory are output. The content selection input screen 810 may be an execution screen of an application such as a file manager or the like.

The electronic device may encrypt content, which is stored in a first path (e.g., the first path 271 of FIG. 2) of a memory and is not encrypted because a security processing function is not applied thereto, based on a user input. For example, the content may be content to which access rights and use rights about an application or a user are not set. The electronic device may encrypt the content based on authentication information including at least one of information of an application having rights to access the content, information of a user having rights to access the content, security key information, or use rights information of the content. The electronic device may set the authentication information to a default setting value and may encrypt the content based on the authentication information thus set. For example, the electronic device may set all applications included in the electronic device as an application having the access rights about the content, may set a user of the electronic device as a user having the access rights about the content, or may set all rights as the access rights about the content. The default setting value may be changed through a user input. The electronic device may store the encrypted content in the first path.

Referring to FIG. 8, if designated content 811 (e.g., a document having a file name of "test.doc") displayed on the content selection input screen 810 is selected by a designated user input (e.g., a long touch input), the electronic device may output a content execution menu object 830 in a designated form (e.g., pop-up) to a display. The content execution menu object 830 may be a display object that allows a user to select an execution function about the selected content. The content execution menu object 830 may include a button 831 for applying a security processing function, a button for executing a first application, a button for executing a second application, and the like.

If the button 831 for applying a security processing function is selected, the electronic device may encrypt the content based on the authentication information. To distinguish encrypted content 813 from the content 811 before encryption, the electronic device may include a distinguishable character in a file name of the encrypted content 813. In the embodiment shown in FIG. 8, a screen is shown on which "test.sirm.doc" that is generated by including "srim" as the distinguishable character in the file name of the encrypted content 813 at the electronic device is displayed. The electronic device may change a tag or an extension of the file name of the encrypted content 813 such that whether to encrypt the content is distinguishable.

In the case of the content 811 that is not encrypted because the security processing function is not applied thereto, an application for executing the content may be restricted. However, if the security processing function is applied to the content in the above-described way, all applications having the access rights about the content may execute the content, thereby lowering the degree of dependency on an execution application about the content.

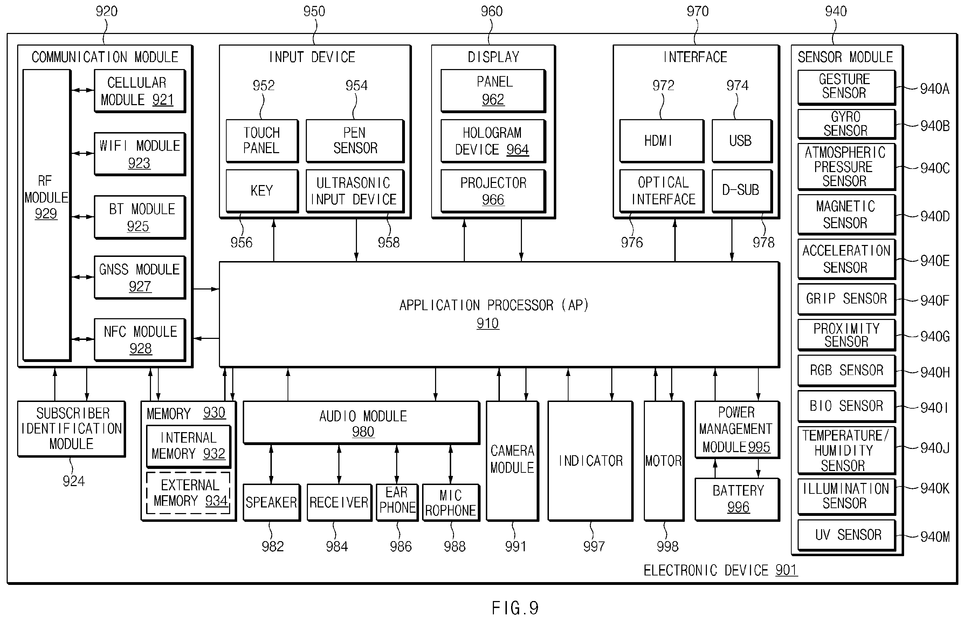

FIG. 9 is a block diagram of an electronic device according to an embodiment of the present disclosure.

Referring to FIG. 9, an electronic device 901 may include, for example, all or a part of an electronic device 101 illustrated in FIG. 1. The electronic device 901 may include one or more processors (e.g., an AP) 910, a communication module 920, a subscriber identification module 924, a memory 930, a sensor module 940, an input device 950, a display 960, an interface 970, an audio module 980, a camera module 991, a power management module 995, a battery 996, an indicator 997, and a motor 998.

The processor 910 may drive an OS or an application to control a plurality of hardware or software elements connected to the processor 910 and may process and compute a variety of data. The processor 910 may be implemented with a system on chip (SoC), for example. The processor 910 may further include a graphic processing unit (GPU) and/or an image signal processor (ISP). The processor 910 may include at least a part (e.g., a cellular module 921) of elements illustrated in FIG. 9. The processor 910 may load and process an instruction or data, which is received from at least one of other elements (e.g., a nonvolatile memory), and may store a variety of data in a nonvolatile memory.

The communication module 920 may have a configuration that is the same as or similar to the communication interface 170 of FIG. 1. The communication module 920 may include a cellular module 921, a Wi-Fi module 923, a Bluetooth (BT) module 925, a GNSS module 927 (e.g., a GPS module, a Glonass module, a Beidou module, or a Galileo module), a NFC module 928, and a radio frequency (RF) module 929.

The cellular module 921 may provide voice communication, video communication, a character service, an Internet service or the like through a communication network. The cellular module 921 may perform discrimination and authentication of the electronic device 901 within a communication network using the subscriber identification module 924 (e.g., a subscriber identification module (SIM) card), for example. The cellular module 921 may perform at least a part of functions that the processor 910 provides. The cellular module 921 may include a CP.

Each of the Wi-Fi module 923, the BT module 925, the GNSS module 927, and the NFC module 928 may include a processor for processing data exchanged through a corresponding module, for example. At least a part (e.g., two or more elements) of the cellular module 921, the Wi-Fi module 923, the BT module 925, the GNSS module 927, and the NFC module 928 may be included within one integrated circuit (IC) or an IC package.

The RF module 929 may transmit and receive, for example, a communication signal (e.g., an RF signal). The RF module 929 may include a transceiver, a power amplifier module (PAM), a frequency filter, a low noise amplifier (LNA), an antenna, or the like. At least one of the cellular module 921, the Wi-Fi module 923, the BT module 925, the GNSS module 927, or the NFC module 928 may transmit and receive an RF signal through a separate RF module.

The subscriber identification module 924 may include, for example, a card, including a subscriber identification module, and/or an embedded SIM and may include unique identification information (e.g., integrated circuit card identifier (ICCID)) or subscriber information (e.g., integrated mobile subscriber identity (IMSI)).

The memory 930 (e.g., the memory 130) may include an internal memory 932 or an external memory 934. For example, the internal memory 932 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 934 may include a flash drive, such as compact flash (CF), SD, micro-SD, mini-SD, extreme digital (xD), multimedia card (MMC), a memory stick, or the like. The external memory 934 may be functionally and/or physically connected to the electronic device 901 through various interfaces.

The sensor module 940 may measure, for example, a physical quantity or may detect an operation status of the electronic device 901. The sensor module 940 may convert the measured or detected information to an electric signal. The sensor module 940 may include at least one of a gesture sensor 940A, a gyro sensor 940B, a barometric pressure sensor 940C, a magnetic sensor 940D, an acceleration sensor 940E, a grip sensor 940F, a proximity sensor 940G, a color sensor 940H (e.g., red, green, blue (RGB) sensor), a biometric sensor 940I, a temperature/humidity sensor 940J, an illuminance sensor 940K, or a ultraviolet (UV) sensor 940M. Additionally or alternatively, the sensor module 940 may include, for example, an E-nose sensor, an electromyography sensor (EMG) sensor, an electroencephalogram (EEG) sensor, an electrocardiogram (ECG) sensor, an infrared (IR) sensor, an iris sensor, and/or a fingerprint sensor. The sensor module 940 may further include a control circuit for controlling at least one or more sensors included therein. The electronic device 901 may further include a processor which is a part of the processor 910 or independent of the processor 910 and is configured to control the sensor module 940. The processor may control the sensor module 940 while the processor 910 remains at a sleep state.

The input device 950 may include, for example, a touch panel 952, a (digital) pen sensor 954, a key 956, or an ultrasonic input device 958. The touch panel 952 may use at least one of capacitive, resistive, infrared and ultrasonic detecting methods. Also, the touch panel 952 may further include a control circuit. The touch panel 952 may further include a tactile layer to provide a tactile reaction to a user.

The (digital) pen sensor 954 may be, for example, a part of a touch panel or may include an additional sheet for recognition. The key 956 may include, for example, a physical button, an optical key, a keypad, and the like. The ultrasonic input device 958 may detect (or sense) an ultrasonic signal, which is generated from an input device, through a microphone (e.g., a microphone 988) and may check data corresponding to the detected ultrasonic signal.

The display 960 (e.g., the display 160) may include a panel 962, a hologram device 964, or a projector 966. The panel 962 may be configured to be the same as or similar to a display 160 of FIG. 1. The panel 962 may be implemented to be flexible, transparent or wearable, for example. The panel 962 and the touch panel 952 may be integrated in a single module. The hologram device 964 may display a stereoscopic image in a space using a light interference phenomenon. The projector 966 may project light onto a screen so as to display an image. The screen may be arranged on the inside or the outside of the electronic device 901. The display 960 may further include a control circuit for controlling the panel 962, the hologram device 964, or the projector 966.

The interface 970 may include, for example, an HDMI 972, a USB 974, an optical interface 976, or a D-sub (D-subminiature) 978. The interface 970 may be included, for example, in the communication interface 170 illustrated in FIG. 1. Additionally or alternatively, the interface 970 may include, for example, a mobile high definition link (MHL) interface, a SD card/ MMC interface, or an infrared data association (IrDA) standard interface.

The audio module 980 may convert a sound and an electric signal in dual directions. At least a part of the audio module 980 may be included, for example, in an I/O interface 150 illustrated in FIG. 1. The audio module 980 may process, for example, sound information that is input or output through a speaker 982, a receiver 984, an earphone 986, or a microphone 988.

The camera module 991 for shooting a still image or a video may include, for example, at least one image sensor (e.g., a front sensor or a rear sensor), a lens, an ISP, or a flash (e.g., an LED or a xenon lamp)

The power management module 995 may manage, for example, power of the electronic device 901. According to an embodiment of the present disclosure, a power management integrated circuit (PMIC), a charger IC, or a battery or fuel gauge may be included in the power management module 995. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 996 and a voltage, current or temperature thereof while the battery is charged. The battery 996 may include, for example, a rechargeable battery or a solar battery.

The indicator 997 may display a specific state of the electronic device 901 or a part thereof (e.g., the processor 910), such as a booting state, a message state, a charging state, and the like. The motor 998 may convert an electrical signal into a mechanical vibration and may generate vibration effects, haptic effects, and the like. Even though not illustrated, a processing device (e.g., a GPU) for supporting a mobile TV may be included in the electronic device 901. The processing device for supporting a mobile TV may process media data according to the standards of DMB, digital video broadcasting (DVB), MediaFloTM, or the like.

Each of the above-mentioned elements of the electronic device according to various embodiments of the present disclosure may be configured with one or more components, and the names of the elements may be changed according to the type of the electronic device. According to various embodiments of the present disclosure, the electronic device may include at least one of the above-mentioned elements, and some elements may be omitted or other additional elements may be added. Furthermore, some of the elements of the electronic device according to various embodiments may be combined with each other so as to form one entity, so that the functions of the elements may be performed in the same manner as before the combination.

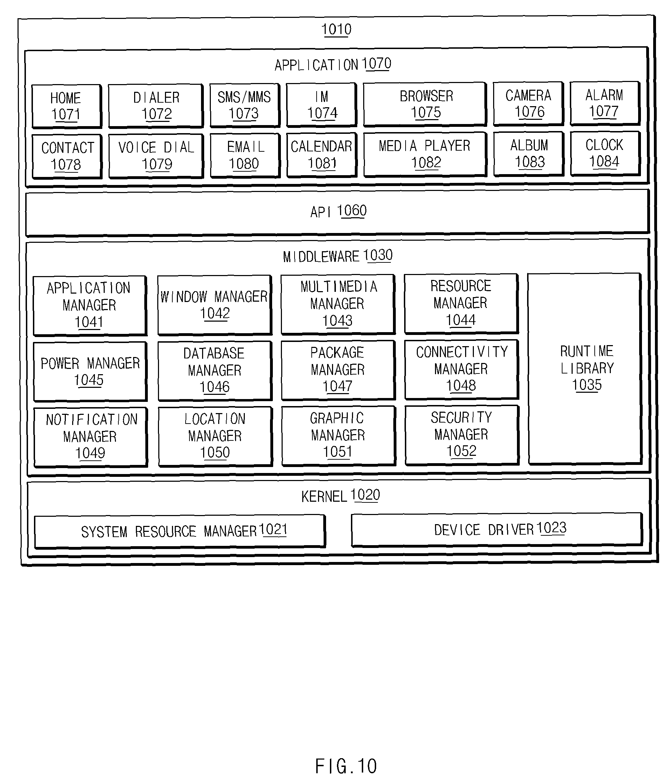

FIG 10 illustrates a block diagram of a program module according to an embodiment of the present disclosure.

Referring to FIG. 10, a program module 1010 (e.g., the program 140) may include an OS to control resources associated with an electronic device (e.g., the electronic device 101), and/or diverse applications (e.g., the application program 147) driven on the OS. The OS may be, for example, android, iOS, windows, Symbian, Tizen, or Bada.

The program module 1010 may include, for example, a kernel 1020, a middleware 1030, an API 1060, and/or an application 1070. At least a part of the program module 1010 may be preloaded on an electronic device or may be downloadable from an external electronic device (e.g., the electronic device 102 or 104, the server 106, and the like).

The kernel 1020 (e.g., the kernel 141) may include, for example, a system resource manager 1021 or a device driver 1023. The system resource manager 1021 may perform control, allocation, or retrieval of system resources. The system resource manager 1021 may include a process managing part, a memory managing part, or a file system managing part. The device driver 1023 may include, for example, a display driver, a camera driver, a BT driver, a common memory driver, an USB driver, a keypad driver, a Wi-Fi driver, an audio driver, or an inter-process communication (IPC) driver.

The middleware 1030 may provide, for example, a function that the application 1070 needs in common or may provide diverse functions to the application 1070 through the API 1060 to allow the application 1070 to efficiently use limited system resources of the electronic device. The middleware 1030 (e.g., the middleware 143) may include at least one of a runtime library 1035, an application manager 1041, a window manager 1042, a multimedia manager 1043, a resource manager 1044, a power manager 1045, a database manager 1046, a package manager 1047, a connectivity manager 1048, a notification manager 1049, a location manager 1050, a graphic manager 1051, or a security manager 1052.

The runtime library 1035 may include, for example, a library module which is used by a compiler to add a new function through a programming language while the application 1070 is being executed. The runtime library 1035 may perform I/O management, memory management, or capacities about arithmetic functions.

The application manager 1041 may manage, for example, a life cycle of at least one application of the application 1070. The window manager 1042 may manage a GUI resource which is used in a screen. The multimedia manager 1043 may identify a format necessary for playing diverse media files, and may perform encoding or decoding of media files by using a codec suitable for the format. The resource manager 1044 may manage resources such as a storage space, memory, or source code of at least one application of the application 1070.

The power manager 1045 may operate, for example, with a basic input/output system (BIOS) to manage a battery or power, and may provide power information for an operation of an electronic device. The database manager 1046 may generate, search for, or modify database which is to be used in at least one application of the application 1070. The package manager 1047 may install or update an application that is distributed in the form of package file.

The connectivity manager 1048 may manage, for example, wireless connection such as Wi-Fi or BT. The notification manager 1049 may display or notify an event such as arrival message, promise, or proximity notification in a mode that does not disturb a user. The location manager 1050 may manage location information of an electronic device. The graphic manager 1051 may manage a graphic effect that is provided to a user, or manage a user interface relevant thereto. The security manager 1052 may provide a general security function necessary for system security or user authentication. In the case where an electronic device (e.g., the electronic device 101) includes a telephony function, the middleware 1030 may further includes a telephony manager for managing a voice or video call function of the electronic device.

The middleware 1030 may include a middleware module that combines diverse functions of the above-described components. The middleware 1030 may provide a module specialized to each OS kind to provide differentiated functions. Furthermore, the middleware 1030 may dynamically remove a part of the preexisting elements or may add a new element thereto.

The API 1060 (e.g., the API 145) may be, for example, a set of programming functions and may be provided with a configuration which is variable depending on an OS. For example, in the case where an OS is the android or the iOS, it may be permissible to provide one API set per platform. In the case where an OS is the tizen, it may be permissible to provide two or more API sets per platform.

The application 1070 (e.g., the application program 147) may include, for example, one or more applications capable of providing functions for a home 1071 (e.g., a home screen), a dialer 1072, a short message service (SMS)/multimedia messaging service (MMS) 1073, an instant message (IM) 1074, a browser 1075, a camera 1076, an alarm 1077, a contact 1078, a voice dial 1079, an e-mail 1080, a calendar 1081, a media player 1082, am album 1083, and a clock 1084, or for offering health care (e.g., measuring an exercise quantity or blood sugar) or environment information (e.g., atmospheric pressure, humidity, or temperature).

The application 1070 may include an application ("information exchanging application") to support information exchange between the electronic device (e.g., the electronic device 101) and an external electronic device (e.g., the electronic device 102 or 104). The information exchanging application may include, for example, a notification relay application for transmitting specific information to the external electronic device, or a device management application for managing the external electronic device.

The information exchanging application may include a function of transmitting notification information, which arise from other applications (e.g., applications for SMS/MMS, e-mail, health care, or environmental information), to an external electronic device (e.g., the electronic device 102 or 104). Additionally, the information exchanging application may receive, for example, notification information from an external electronic device and provide the notification information to a user.

The device management application may manage (e.g., install, delete, or update), at least one function (e.g., turn-on/turn-off of an external electronic device itself (or a part of components) or adjustment of brightness or resolution of a display) of the external electronic device (e.g., the electronic device 102 or 104) which communicates with the electronic device, an application running in the external electronic device, or a service (e.g., a call service or a message service) provided from the external electronic device.

The application 1070 may include an application (e.g., a health care application) which is assigned in accordance with an attribute (e.g., an attribute of a mobile medical device as a kind of electronic device) of the external electronic device (e.g., the electronic device 102 or 104). The application 1070 may include an application which is received from an external electronic device (e.g., the server 106 or the electronic device 102 or 104). The application 1070 may include a preloaded application or a third party application which is downloadable from a server. The component titles of the program module 1010 according to the embodiment of the present disclosure may be modifiable depending on kinds of OSs.

According to various embodiments of the present disclosure, at least a part of the program module 1010 may be implemented by software, firmware, hardware, or a combination of two or more thereof. At least a part of the program module 1010 may be implemented (e.g., executed), for example, by a processor (e.g., the processor 910). At least a part of the program module 1010 may include, for example, modules, programs, routines, sets of instructions, or processes, or the like for performing one or more functions.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments of the present disclosure may be, for example, implemented by instructions stored in a computer-readable storage media in the form of a program module. The instruction, when executed by one or more processors (e.g., the processor 120), may cause the one or more processors to perform a function corresponding to the instruction. The computer-readable storage media, for example, may be the memory 130.

A computer-readable recording medium may include a hard disk, a floppy disk, a magnetic media (e.g., a magnetic tape), an optical media (e.g., a compact disc ROM (CD-ROM), a DVD, or a magneto-optical media (e.g., a floptical disk)), and a hardware device (e.g., a ROM, a RAM, or a flash memory). Furthermore, a program command (or an instruction) may include not only a mechanical code such as things generated by a compiler but also a high-level language code executable on a computer using an interpreter. The above hardware unit may be configured to operate via one or more software modules for performing an operation of the present disclosure, and vice versa.

A module or a program module according to various embodiments may include at least one of the above elements, or a part of the above elements may be omitted, or additional other elements may be further included. Operations performed by a module, a program module, or other elements according to various embodiments of the present disclosure may be executed sequentially, in parallel, repeatedly, or in a heuristic method. Furthermore, a part of operations may be executed in different sequences, may be omitted, or other operations may be added. While the present disclosure has been shown and described with reference to various embodiments thereof, it will be understood by those skilled in the art that various changes in form and details may be made therein without departing from the spirit and scope of the present disclosure as defined by the appended claims and their equivalents.

According to various embodiments of the present disclosure, a security processing service may be provided to each application through a security processing module that operates independently of an execution program of content. As such, dependency on the execution program may be lowered in content security processing, and content processed by the security processing module may be executed regardless of a kind of the execution application.

Furthermore, a high level of content security processing function may be provided since the security processing module encrypts and decrypts content, changes an access path about the content, or restrict the use of a function module based on use rights of the content.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a housing of the electronic device;
a memory disposed in the housing;
a user interface; and
a processor electrically connected with the memory and the user interface,
wherein the memory stores instructions, which, when executed, cause the processor to:
store encrypted content in the memory,
receive an input for loading the content through the user interface,
decrypt the content based at least in part on the input,
store the decrypted content in the memory separately from the encrypted content, and
provide the decrypted content through the user interface.

2. The electronic device of claim 1, wherein the instructions cause the processor to decrypt the content based on authentication information comprising at least one of information about an application executing the content, information about user access to the content, security key information, or use rights information about the content.

3. The electronic device of claim 1, wherein the instructions cause the processor to:
store the encrypted content in a first path of the memory; and
store the decrypted content in a second path different from the first path.

4. The electronic device of claim 3, wherein the instructions cause the processor to provide the second path to an application that uses the content.

5. The electronic device of claim 1, wherein the instructions cause the processor to delete the decrypted content if a use termination request of the content is received.

6. The electronic device of claim 2, wherein the instructions cause the processor to restrict a use of a function module of the electronic device supporting a function that is not set in the use rights information of the content.

7. The electronic device of claim 6, wherein the function module of the electronic device comprises at least one of a screen capture module, an audio capture module, or a clipboard management module.

8. An electronic device comprising:
a housing of the electronic device;
a memory in the housing;
a user interface; and
a processor electrically connected with the memory and the user interface,
wherein the memory stores instructions, which, when executed, cause the processor to:
receive an input for generating or editing content through the user interface,
store the content in an unencrypted state in the memory,
receive a user input for storing the unencrypted content,
encrypt the content based at least in part on the user input, and
store the encrypted content in the memory separately from the unencrypted content.

9. The electronic device of claim 8, wherein the instructions cause the processor to determine whether to store the encrypted content based on use rights information of the content.

10. The electronic device of claim 8, wherein the instructions cause the processor to delete the unencrypted content after the user input is received.

11. A content security processing method of an electronic device, the method comprising:
decrypting encrypted content stored in a first path of a memory;
storing the decrypted content in a second path of the memory; and
providing the second content to an application, which uses the content, when the application is executed.

12. The method of claim 11, wherein the decrypting comprises:
decrypting the content based on authentication information comprising at least one of information about an application executing the content, information about user access to the content, security key information, or use rights information about the content.

13. The method of claim 12, further comprising:
restricting a use of a function module of the electronic device supporting a function that is not set in the use rights information of the content.

14. The method of claim 11, further comprising:
deleting the decrypted content if a use termination request of the content is received.

15. The method of claim 11, further comprising:
storing the content in an unencrypted state in the memory if an input for generating or editing the content is received;
receiving a user input for storing the unencrypted content;
encrypting the content based at least in part on the user input; and
storing the encrypted content in the memory separately from the unencrypted content.
